Europäisches Patentamt

European Patent Office

Office européen des brevets

(11) Publication number: **0 120 860**

**B1**

(12) **EUROPEAN PATENT SPECIFICATION**

(45) Date of publication of patent specification: **21.10.87**

(21) Application number: **83901258.0**

(22) Date of filing: **14.04.83**

(86) International application number:
**PCT/SE83/00138**

(87) International publication number:
**WO 83/03614 27.10.83 Gazette 83/25**

(51) Int. Cl.⁴: **C 09 D 5/34, C 04 B 28/00**

(54) **METHOD FOR MANUFACTURING SPRAY PLASTER.**

(30) Priority: **15.04.82 SE 8202352**

(43) Date of publication of application:
**10.10.84 Bulletin 84/41**

(45) Publication of the grant of the patent:
**21.10.87 Bulletin 87/43**

(84) Designated Contracting States:
**AT BE CH DE FR GB LI LU NL**

(56) References cited:
**CH-B- 300 853**
**SE-B- 316 552**
**SE-B- 372 507**
**SE-C- 224 515**
**US-A-2 600 018**
**US-A-3 824 107**
**US-A-4 065 319**

(73) Proprietor: **STRABRUKEN AB**
**Box 5227**
**S-102 45 Stockholm (SE)**

(72) Inventor: **ANDERSSON, Olof**
**V:A Henriksborgsvägen 19**
**S-131 31 Nacka (SE)**
Inventor: **BAUER, Werner**
**Lilla Garn**
**S-180 40 Brottby (SE)**

(74) Representative: **Jacobsson, Rune**
**JACOBSSON & BILLBERG PATENTBYRA AB Box 21113**
**S-100 31 Stockholm 21 (SE)**

Courier Press, Leamington Spa, England.

## Description

The present invention relates to a method for manufacturing spray plaster (German: Sandspachtel).

Prior Art

A spray plaster is a product, which during more than 25 years has been in use as a thin coat plastic for treatment of fairly smooth interior surfaces of concrete, light weight concrete, gypsum board, etc., prior to painting or wall-papering. It is also used as a textured finishing coat on said type of surfaces.

Such spray plaster is built up by granular components having a maximum grain size usually less than 0,5 mm, often less than 0,25 mm, and is formed by mixing the components with water into a paste-like spray plaster consistency. A plaster of principally the same composition but with a somewhat lower water content is also known, giving it a consistency suitable for application by hand. A water-soluble organic thickening and binding agent is included in the components in such an amount that the desired plastic consistency is obtained. Since thickening agents are expensive compared with binding agents, a thickening agent mixed with a binding agent is often used. There are also binding agents which normally serve as thickening agents. Moreover, binding agents in the form of plastic dispersions can also be added. The water content is usually 20—28% of the weight of the ready-mixed plaster. The plaster is usually manufactured in factory and delivered as finished product to the building site. However, a product not containing water, i.e. dry plaster is also often manufactured in factory and delivered to the building site, where the dry product is mixed with water in mixers, whereupon the wet-mixed product is transferred to a spray equipment or is applied by hand. This last mentioned procedure has compared with the manufacture of finished product in factory the advantage, that carriage or freight charges for the delivery from factory become less due to the reduced weight (20—28%) of the product not containing water, and furthermore the risk for frost during transport and store is eliminated. However, this procedure has the disadvantage, that the treatment time for obtaining correct plaster consistency is rather long. At work sites with manufacture of plaster in said mixers the treatment time is from about five minutes and up to about twenty minutes. Moreover, if the plaster is to be sprayed, a transfer from the mixer to a spray equipment is required.

As distinguished from the manufacture of spray plaster said disadvantage with long treatment times does not exist when manufacturing finishing mortar or gypsum plaster. Even if there are certain similarities in components and application between finishing mortar and spray plaster, these products however differ from each other in a great degree. Spray plaster contains organic thickening and binding agents in such an amount, that the paste-like consistency is obtained. Finishing mortar such as gypsum plaster, cement-lime mortar or the like have quite another consistency and are characterized in that they are substantially built up by inorganic binding agents and often contain aggregates with a grain size up to 3 to 4 mm. Also organic binding agents can be added but then in a very small amount compared with the content in the paste-like spray plaster (a tenth or less), and this small admixture is made in order to intimately bind the additive water and prevent too rapid loss thereof after application. The problem as to the comparatively long preparation time existing when mixing a plaste-like plaster consistency does accordingly not exist when mixing a finishing mortar. When dry mortar is mixed with water, a water-mixed product ready for use is rapidly and directly obtained. This fact has made it possible to spray the water-mixed product on the surface to be covered immediately after the rapid mixing of the product. Continuously operating rapid mixers for finishing mortar and gypsum plaster with or without connected spray equipment have also been constructed and used for several years, for instance mixers described and shown in the book "Spritzbeton-Spritzmörtel-Spritzputz" by Gunther Brux, Richard Linder and Günter Ruffort, published 1981 by Verlagsgesellschaft Rudolf Müller, Köln-Braunsfeld, West Germany.

CH—A—300 853 is one of the first publications describing the product spray plaster to be used on fairly smooth interior building surfaces instead of traditional mortar. The way of manufacturing the spray plaster is not described but it is generally known that the dry product was mixed with water at the work site in a time-consuming mixing process for obtaining after "swelling" the right consistency of the spray plaster ready for use.

Thus, according to prior art it is when manufacturing finishing mortar or gypsum plaster possible to obtain rapidly and directly a product ready for use by spraying. However, with methods known up to now for the manufacture of a spray plaster from the components dry plaster and water, a comparatively long preparing time has been required before a homogeneous paste-like plaster ready for application, for instance by spraying, has been obtained.

Description of the Invention

The object of the present invention is to make it possible in a continuous operation to add water to a dry product and obtain rapidly a plaster having the same consistency and homogeneity as the plaster that has been previously produced batchwise, and thereby admit a more rational handling of the material flow than what has previously been the case. This object has according to the invention been achieved by using a method as stated in claim 1.

Thus, it has surprisingly been established, that plaster, contrary to the conception existing during many years, can be produced in corresponding way and substantially equally rapid as finishing mortar (<1 minute) and obtain a perfect plaster product of the same consistency as has been previously manufactured by batchwise production in a plaster factory. The manufacture of the plaster can take place at the work site or in a factory. Besides the above mentioned advantages in the first mentioned case, also the advantages concerning an essentially cheaper transport to the work site are obtained (weight reduction of 20—28% corresponding to the weight of added water), avoiding of risk for frost during transport and storage in winter time, rational handling at the work site by the fact that the dry product can be handled in closed containers, from which it in known manner can continuously be conveyed in closed system to the place for the application of the plaster, and the possibility of a rational handling in bulk from factory to work site, whereby handling in piece packing with belonging costs in all stages is avoided.

The rapid continuous mixing according to the invention has been proved to be able to be carried out in known high-speed mixers, for instance mixers as disclosed in above mentioned book "Spritzbeton-Spritzmörtel-Spritzputz", thus in continuous mixing process with continuous discharge of plaster ready for use. This also makes possible a direct connection of a spray equipment to the mixer when application of plaster by spraying is desired. For instance, a continuous flow mixer (German: Durchlaufmischer) has proved to be well adapted. In this mixer a continuous feeding of the dry product and the water takes place during the mixing.

By using a method according to the invention the total manufacturing procedure can furthermore take place continuously in the factory, wherein the dry product is mixed in continuously operating mixers and thereafter continuously fed to the continuously operating mixer for mixing with water and continuous discharge of finished plaster therefrom, whereby according a continuous manufacture of plaster starting from the basic components is obtained.

Cellulose derivate in powder state can advantageously be used as easy-dissolving binding agent. However, also other products giving easy dissolving, homogenizing and plaster consistency can be used.

In tests carried out in order to control the correctness of the inventive idea the dry product has for example consisted of:

| | |
|---|---|
| dolomite | 67% |
| chalk | 3.2% |
| bentonite | 1.2% |
| zinc oxide | 0.13% |
| cellulose derivative | 0.8% |
| plastic dispersion | 0.6% |

Moreover, a suitable rust inhibitor, for instance sodium nitrite, and suitable preservative may also be added.

In case the product is not delivered in wet-mixed form, it is also possible, that the factory-mixed product can contain hydraulic binders, for instance cement. When manufacturing plaster in wet state it has not been possible to deliver to the building site a pre-fabricated product containing such hydraulic binder. In cases a plaster with higher water resistance has been pursued, one has been forced to accomplish this either by adding the hydraulic binder immediately prior to plastering or by using a high content of plastic dispersion, which has made the product more expensive.

**Claims**

1. A method for manufacturing spray plaster by mixing a product with water, said product being a dry mix consisting of the conventional components of such a product including a water soluble organic thickening and binding agent for forming, upon the mixing of the dry mix with water, the consistency of a spray plaster, said agent being an easy-dissolving powder in an amount of about 0.8% by weight calculated on the dry product, and being at least partly a cellulose derivative, characterized in supplying said mix and water to a continuously operating mixer, continuously mixing said mix and water in the mixing part of said mixer for obtaining during less than one mixing minute dischargeable spray plaster ready for use, and discharge continuously from said mixer said ready-mixed spray plaster.

2. A method according to claim 1, wherein the spray plaster is manufactured in a completely continuous manufacturing process, characterized in mixing the components of said dry mix in a continuously operating mixer, feeding continuously said mix and water to the continuously operating mixer for said mixing of said mix with water and discharging therefrom continuously said ready-mixed spray plaster.

3. A method according to any of the preceding claims, characterized in adding a hydraulic binder to the product.

**Patentansprüche**

1. Verfahren zur Herstellung von Sandspachtel durch Mischen eines Produkts mit Wasser, welches Produkt eine Trockenmischung ist, die aus den üblichen Komponenten eines solchen Produkts besteht und ein wasserlösliches organisches Verdickungs- und Bindemittel enthält, um beim Vermischen der Trockenmischung mit Wasser die Konsistenz von Sandspachtel zu ergeben, welches Mittel ein leicht lösliches Pulver in einer Menge von etwa 0,8 Gewichtsprozent, berechnet auf das trockene Produkt, und mindestens teilweise ein Cellulosederivat ist, gekennzeichnet durch Einspeisen von Mischung und Wasser in einen kontinuierlich arbeitenden Mischer, kontinuierliches Vermischen der Mischung mit Wasser im Mischteil des Mischers, um in weniger als einer Minute austragfähige verwendungsfertige Sandspachtel zu erzeugen, und Austragen der fertig vermischten Sandspachtel aus dem Mischer.

2. Verfahren nach Anspruch 1, wobei die Sandspachtel in einem vollständig kontinuierlichen Herstellungsverfahren gewonnen wird, gekennzeichnet durch Mischen der Komponenten der Trockenmischung in einem kontinuierlich arbeitenden Mischer, kontinuierliches Einspeisen von Mischung und Wasser in den kontinuierlich arbeitenden Mischer zum Vermischen von Mischung mit Wasser und kontinuierliches Austragen der fertig gemischten Sandspachtel aus dem Mischer.

3. Verfahren nach einem der vorangehenden Ansprüche, dadurch gekennzeichnet, dass dem Produkt ein hydraulisches Bindemittel zugesetzt wird.

**Revendications**

1. Un procédé de fabrication d'un plâtre appliqué par pulvérisation en mélangeant un produit avec de l'eau, ce produit étant une composition sèche composée des constituants conventionnels d'un tel produit y compris un agent organische épaississant et liant soluble dans l'eau pour former, après mélange de la composition sèche avec de l'eau la consistance d'un plâtre pour application par pulvérisation, ledit agent étant une poudre de solution facile en une quantité d'environ 0,8% par poids calculé à partir du produit sec et étant au moins partiellement un dérivé de cellulose, caractérisé en ce qu'on conduit cette composition et de l'eau à un mélangeur continu, en ce qu'on mélange de façon continue cette composition et l'eau dans la section de mélange de ce mélangeur pour obtenir en moins d'une minute de mélange un plâtre pour application pa pulvérisation débitable prêt à l'emploi, et en ce qu'on débite de façon continue de ce mélangeur ce plâtre pour application par pulvérisation en mélange prêt à l'emploi.

2. Un procédé selon la revendication 1, dans lequel le plâtre pour application par pulvérisation est préparé en un procédé de fabrication entièrement continu, caractérisé en ce qu'on mélange les composants de la composition sèche dans un mélangeur continu, en ce qu'on alimente continuellement un mélangeur continu avec cette composition sèche et de l'eau pour mélanger cette composition sèche avec l'eau en ce qu'on débite de façon continue ce plâtre pour application par pulvérisation mélangé prêt à l'emploi.

3. Un procédé selon l'une des revendications précédentes, caractérisé en ce qu'on ajoute au produit un agent liant hydraulique.